# FASCICULE DE BREVET EUROPEEN

(11) **EP 2 315 998 B1**
(45) Date de publication et mention de la délivrance du brevet: **06.06.2012**
(21) Numéro de dépôt: 09741320.7
(22) Date de dépôt: 21.08.2009
(51) Int. Cl.: F41H 11/18, F41H 11/30, B60B 15/04

(54) **ROUE DE DECLENCHEMENT DES MINES PAR PRESSION**
RAD ZUR AUSLÖSUNG VON MINEN MITTELS DRUCK
WHEEL FOR TRIGGERING MINES BY PRESSURE

(30) Priorité: 28.08.2008 FR 0804734
(43) Date de publication de la demande: 04.05.2011
(73) Titulaire: Etat Français représenté par le Délégué Général pour L'Armement, 94114 Arcueil (FR)
(72) Inventeur: GRIMA, Michel, F-49290 Chalonnes-sur-Loire (FR)
(86) Numéro de dépôt international: PCT/FR2009/001021
(87) Numéro de publication internationale: WO 2010/023373

(56) Documents cités:
- FR-A- 2 851 036
- GB-A- 1 209 161
- JP-A- 6 026 796

## Description

L'invention concerne les dispositifs roulant exerçant une pression sur le sol, destinés à effectuer un leurrage des mines à pression, plus particulièrement lorsqu'il s'agit de déminer des itinéraires.

Le principe du leurrage massique consiste à appliquer au sol des efforts suffisants pour faire exploser les mines à pression, posée ou enfouies dans le sol. Cependant, on veut minimiser le poids des dispositifs utilisés à cet effet.

Les dispositifs connus, comme celui décrit dans le document JP406026796A, sont des roues lestées, ayant une bande de roulement pleine ou équipée de pneumatique, tractées ou poussées par un système. En avançant, la roue exerce une pression correspondant à l'ensemble du poids du dispositif sur une bande de terrain ayant la largeur de sa bande de roulement. L'inconvénient de ces dispositifs est que le poids nécessaire pour exercer la pression servant à déclencher les mines peut être élevé.

L'objectif de l'invention est de permettre d'appliquer sur le sol un effort équivalent à celui d'une roue lestée en diminuant le poids de l'ensemble, obtenant ainsi un dispositif de leurrage des mines plus efficace pour une masse équivalente ou moins lourd pour une même efficacité.

La solution apportée est d'équiper un dispositif de déclenchement de mine par pression comprenant un châssis apte à transmettre un effort de traction ou de poussée et au moins une roue avec un moyeu central, apte à assurer le déplacement du dispositif sur le sol :
- d'au moins un ensemble dans l'épaisseur de la roue, comportant une masselotte et mobile en translation selon une direction radiale, le rayon vertical sous le moyeu faisant partie des directions radiales que peut prendre chaque au moins un ensemble mobile,
- et de moyens aptes à entraîner, lorsque la roue tourne dans une direction déterminée par rapport au châssis, ledit au moins ensemble mobile en direction du moyeu sur un secteur limité, ce secteur se terminant sous le niveau du moyeu et préférentiellement sous ce moyeu.

Ledit dispositif est caractérisé en ce que soit lesdits moyens aptes à entraîner ledit au moins un ensemble mobile en direction du moyeu sont fixes par rapport au châssis soit ledit ensemble mobile en translation comporte un support fixe par rapport au châssis.

Ce dispositif comportera avantageusement des moyens de stockage d'énergie aptes à emmagasiner de l'énergie lorsque ledit au moins ensemble mobile est entraîné en direction de l'essieu et à restituer cette énergie lorsqu'il ne l'est plus.

Dans un premier mode de réalisation, ce dispositif comporte au moins une série d'ensembles mobiles identiques formant une couronne complète, tournant avec la roue, et le moyen d'entraînement commun pour chaque ensemble mobile de la couronne est formé d'une glissière fixe par rapport au châssis occupant un secteur angulaire limité, apte à entrer en contact avec un élément de contact dudit au moins ensemble mobile sur ledit secteur limité entre une première extrémité et une seconde extrémité, cette dernière extrémité étant plus proche du moyeu que la première et se trouvant devant le plan vertical passant par l'axe de la roue.

Le moyen de stockage d'énergie peut avantageusement être un ressort déjà comprimé lorsque la masselotte est en contact avec l'intérieur de la bande de roulement. Il est ensuite davantage comprimé lorsqu'un galet solidaire de la masselotte passe sur une glissière fixe dont le profil se rapproche du moyeu en tournant dans le sens de la rotation de la roue avant de se détendre à la verticale sous l'essieu lorsque le galet quitte la came.

Dans un autre mode de réalisation, il s'agit d'une roue pouvant tourner autour d'un essieu comprenant une bande de roulement apte à appliquer un effort sur le sol, caractérisée en ce qu'elle comporte au moins un ensemble mobile restant vertical sous l'axe de la roue et que le moyen d'entraînement du galet tourne avec la roue. Ce moyen d'entraînement sera avantageusement une came fixée sur la circonférence intérieure de la bande de roulement qui reproduit un motif de base en forme de coin dont la pointe est orientée vers le sens de rotation de la roue avec un décrochement suivi d'une portion de circonférence intérieure de la bande de roulement, occupant un secteur angulaire de dimension comparable à l'encombrement du galet par rapport à la circonférence de la roue.

Le fonctionnement de l'invention pourra être mieux compris par la description de différents modes de réalisation d'une roue de déclenchement de mines à pression et au regard des figures annexées :
- La figure 1 montre le premier mode de réalisation vu selon l'axe du moyeu avec les ensembles mobiles solidaires du mouvement de la roue et la glissière fixe qui remonte chaque masselotte avant de la libérer lorsqu'elle passe à la verticale du point de contact avec le sol.
- La figure 2 montre le détail d'une disposition de la glissière fixe et des galets vue selon une coupe radiale légèrement en avant de l'axe lorsque la came retient encore le galet.
- La figure 3 montre le détail d'une seconde disposition de la glissière fixe et des galets vue selon une coupe radiale légèrement en avant de l'axe lorsque la came retient encore le galet.
- La figure 4a représente la comparaison entre les efforts appliqués au sol par une roue équipée du dispositif correspondant à l'invention et les efforts appliqués au sol par une roue de même géométrie et de même poids, en fonction de la distance sur le sol.
- La figure 4b représente la comparaison entre les efforts appliqués au sol par une roue équipée du dispositif correspondant à l'invention et les efforts appliqués au sol par une roue de même géométrie et de même poids, en fonction du temps sous l'axe de l'essieu.
- La figure 5 montre une vue en perspective d'une variante du premier mode de réalisation où deux couronnes de masselottes sont disposées en quinconce.
- La figure 6a montre une vue selon l'axe du moyeu d'une variante du premier mode de réalisation où il n'y a pas de bande de roulement rigide et où les masselottes sont en contact direct avec le sol.
- La figure 6b montre une vue en coupe radiale d'une variante avec trois couronnes d'ensembles mobiles juxtaposés du premier mode de réalisation où il n'y a pas de bande de roulement rigide et où les masselottes sont en contact direct avec le sol.
- La figure 7 montre une vue selon l'axe du moyeu du second mode de réalisation de l'invention où les ensembles mobiles sont solidaires du moyeu, verticaux et manoeuvrés par des cames fixées à la bande de roulement.
- La figure 8 montre une vue en coupe radiale d'une variante du second mode de réalisation de l'invention avec trois ensembles mobiles, solidaires du moyeu, manoeuvrés par des cames fixées à la bande de roulement.

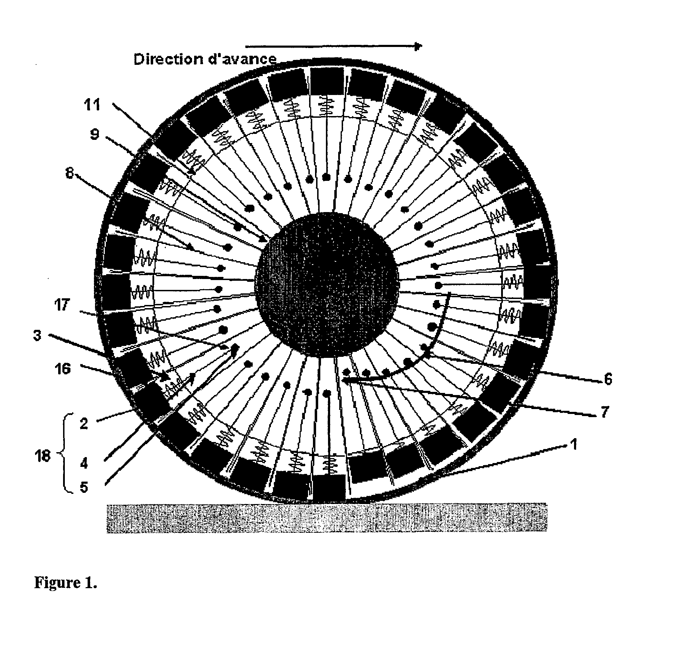

La figure 1 montre une roue de déclenchement par pression de mines selon un premier mode de réalisation de l'invention. Typiquement, cette roue est apte à tourner autour d'un essieu 10, non représenté sur la figure, lorsque l'ensemble de déminage dont il fait partie avance dans la direction choisie. Cette roue a une certaine épaisseur dans l'axe de l'essieu 10 qui détermine la largeur de la bande de roulement et donc de la bande de terrain qui sera traitée lors de son avance.

Cette roue comporte un moyeu central 9, une couronne extérieure 1 constitutive d'une bande de roulement et des moyens de liaison 8 entre le moyeu 9 et la bande de roulement 1. Ces moyens de liaisons 8 sont constitués par des rayons régulièrement répartis. Une seconde couronne 11 en forme de bande circulaire plus proche de la bande de roulement 1 que du moyeu 9 est solidaire des moyens de liaison 8. Cette seconde couronne comporte au moins un alésage entre deux moyens de liaison successifs 8.

Chaque secteur angulaire de roue compris entre deux moyens de liaison 8 successifs contient un ensemble mobile 18 comprenant une masselotte 2 liée à au moins une tige 4 orientée suivant le rayon de la roue le long duquel l'ensemble mobile se translatera. Chaque tige 4 est liée à son extrémité périphérique 16 à la masselotte 2 et à son extrémité intérieure 17 à un galet 5, libre en rotation selon un axe perpendiculaire à la tige 4. Chaque tige 4 est libre en translation le long du rayon et traverse la deuxième couronne 11 par un alésage. La masselotte occupe le maximum d'espace en circonférence entre deux moyens de liaisons successifs pour optimiser son poids et pouvoir bouger le long du rayon de la tige 4 à laquelle elle est fixée entre une position de butée périphérique où elle touche l'intérieur de la bande de roulement 1 et une position proche de la deuxième couronne 11. La longueur de la tige 4 est donc adaptée pour que son extrémité intérieure 17 ne soit pas en contact avec le moyeu lorsque la masselotte est en bout de course vers la couronne intérieure 11.

Dans ce mode de réalisation, le galet 5 est l'élément fixé sur la tige, apte à transmettre à celle-ci un effort le long de son axe en se déplaçant à la surface d'un autre objet. Le fait que le galet est libre en rotation permet de minimiser les forces de frottement en roulant sur la surface mais il est évident que tout autre dispositif permettant le déplacement le long de cette surface remplit la fonction.

De plus, chaque ensemble mobile est associé à un système élastique 3 apte à appliquer sur lui une force toujours croissante vers la périphérie lorsqu'il se rapproche de l'axe de la roue. Ce système élastique peut avantageusement être constitué d'au moins un ressort dont l'une des extrémités repose sur la couronne intérieure 11 et l'autre sur l'une des faces de la masselotte.

La totalité des ensembles mobiles forme une troisième couronne occupant la totalité de la circonférence de la roue. Dans l'exemple de réalisation de la figure 1 la couronne comprend 32 secteurs angulaires avec autant d'ensembles mobiles, mais ce nombre peut être modifié en fonction des dimensions de la roue et des réglages entre le poids de la masselotte, la raideur du système élastique et la longueur de la course de l'ensemble mobile.

Le dispositif comprend également au moins une glissière fixe 6 par rapport à l'essieu. Cette glissière a pour fonction, lorsque la roue tourne, d'entraîner le galet 5 situé à l'extrémité 17 des tiges 4 de la position où il se trouve quand l'ensemble mobile arrive, en butée périphérique, à l'horizontal devant l'essieu, à la position que ce galet 5 occupe lorsque l'ensemble mobile arrive, en bout de course intérieure, à une position presque verticale avant de passer sous l'axe de l'essieu. Pour cela, la glissière 6 associée à un galet 5 a une forme de lame dont la surface intérieure, parallèle à l'axe de l'essieu, voit sa distance à cet axe partir d'une valeur égale à celle de la distance du galet 5 en butée extérieure et décroître régulièrement d'une valeur égale à la course autorisée de l'élément mobile 18 en tournant dans le secteur angulaire de l'extrémité qui se trouve devant l'essieu 10 jusqu'à son décrochement final 7, un peu avant la verticale de l'axe de l'essieu.

Avantageusement, le secteur angulaire occupé par la glissière peut se débuter à l'horizontale devant l'essieu et se terminer à un angle valant environ la moitié de celui séparant deux moyens de liaison 8 avant l'axe vertical passant par l'axe de la roue. Il suffit cependant que la glissière occupe un secteur angulaire limité, s'arrêtant avant la verticale sous l'essieu. Par secteur limité, il faut entendre un secteur inférieur à 2π radians.

Lorsque la surface intérieure de la glissière 6 rencontre le galet 5 avec le mouvement de rotation, elle le pousse vers l'axe de l'essieu et le galet entraîne le reste de l'ensemble mobile. Puis lorsque le galet atteint le décrochement 7, il est libéré brutalement et l'ensemble mobile peut revenir en butée contre la bande de roulement1. Cette glissière 6, associée au galet 5, constitue donc un moyen d'entraînement des ensembles mobiles dans un secteur angulaire située entre 90° et un angle faible avant l'axe vertical sous l'essieu, entre leur position en butée extérieure contre la bande de roulement et une position rapprochée de l'axe de l'essieu. Pour assurer un bon guidage des ensembles mobiles le long du rayon de la roue et mieux répartir les efforts, cet ensemble comprendra avantageusement au moins deux tiges 4 réparties sur l'épaisseur de la roue selon l'axe, avec un ressort 3 installé autour de chaque tige 4. Le ressort 3 peut être installé entre la masselotte 2 et la couronne intérieure 11, dans ce cas il travaille en compression. Ce ressort 3 peut aussi être installé autour de chaque tige entre la couronne intérieure 11 et le galet 5, dans cette configuration le ressort travaille en détente.

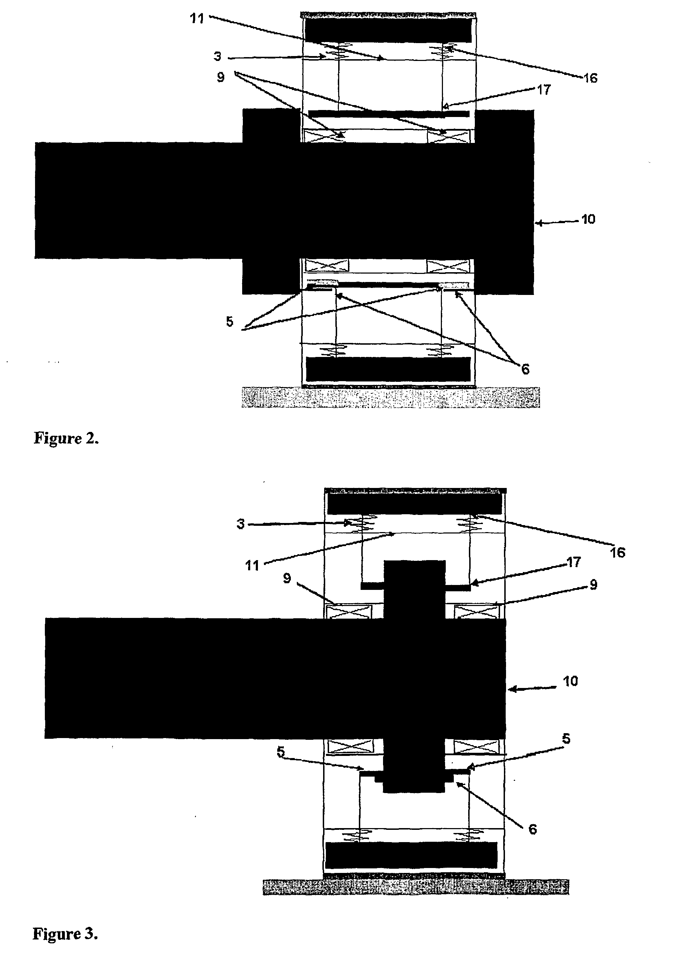

La figure 2 montre une première disposition des glissières et galets où l'essieu 10 comporte deux disques de chaque côté de la roue qui entourent le moyeu 9. La glissière 6 est constituée de deux lames, dont le profil a été décrit plus haut, fixées à l'extrémité des disques de l'essieu 10 vers l'intérieur de la roue par rapport à son plan de symétrie perpendiculaire à l'axe. Les galets 5 de l'ensemble mobile sont fixés à l'extrémité 17 des tiges 4, de chaque côté d'une structure de rigidité qui rend les extrémités 17 solidaires, vers l'extérieur de chaque côté de la roue. Les lames de la glissière 6 entrent en contact chacune avec un galet 5.

La figure 3 montre une deuxième disposition des cames et galets où l'essieu 10 comporte un disque central entouré par le moyeu 9 de la roue. La glissière 6 est constituée de deux lames, dont le profil a été décrit plus haut, fixées de chaque côté à l'extrémité du disque de l'essieu 10. Les galets 5 sont tournés vers l'intérieur à l'extrémité 17 de deux tiges 4 dont l'écartement correspond à l'épaisseur entre les deux lames de la came 6.

Chaque galet 5 d'un ensemble mobile entre en contact à chaque tour de roue avec la glissière fixe 6. La glissière 6 entraîne le galet et le système élastique est comprimé par la course de la masselotte. Lorsque l'ensemble mobile passe en position verticale, après libération du galet au niveau du décrochement 7 de la glissière, la détente du système élastique projette la masselotte 2 sur la face interne de la bande de roulement 1 à l'endroit où elle est en contact avec le sol.

La position du début de la glissière 6 en avant de l'essieu peut ne pas être rigoureusement à l'horizontale devant l'axe de l'essieu. Par contre, la position du décrochement 7 avant la verticale doit être adaptée à la géométrie des ensembles mobiles pour que la masselotte 2 tombe bien sur la bande de roulement 1 à l'endroit où elle touche le sol.

Les masselottes viennent frapper la partie intérieure de la bande de roulement de la roue à la verticale de la ligne de contact de celle-ci avec le sol. Les impacts induits au niveau du sol sont répartis sur la zone de contact entre la bande de roulement et le sol. C'est la bande de roulement qui répartit les efforts dus à l'impact sur le sol. Successivement lors de la rotation, chaque masselotte produira un impact de telle sorte que l'historique de l'effort appliqué au sol présentera une succession de maxima qui pourront atteindre plusieurs fois celui appliqué par la roue passive de même poids et déclencher de mines à ce moment là.

A titre d'exemple, un cas test simple a été effectué pour une roue dont les caractéristiques sont les suivantes :
- diamètre de la roue : 40 cm ;
- nombres de dispositifs masse - tige - ressort - galet de roulement : 12 ;
- masse propre de la roue : 80 kg ;
- masse totale de la roue et de sa charge verticale rapportée (partie de la remorque en appui sur la roue) : 200 kg
- ressort de raideur : 30 kN/m ;
- course du ressort de l'ordre de 5 cm ;

Les résultats ont mis en évidence un facteur d'environ 3 entre l'effort maximal induit au sol, avec et sans dispositif.

En prenant un dispositif masse - tige - ressort - galet de roulement plus léger, soit pour une roue 50 kg, la masse totale de la roue et de sa charge verticale rapportée étant toujours de 200 kg, ce facteur entre l'effort maximal induit au sol, avec et sans dispositif, est de 2,4.

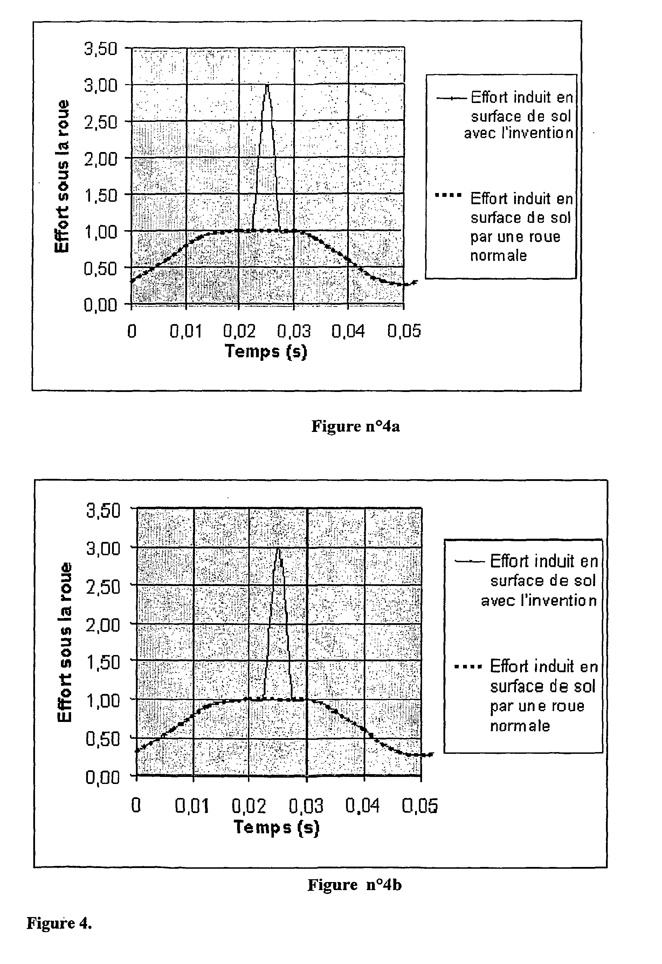

Les deux graphiques de la figure 4 montrent les écarts d'effort obtenus avec et sans le dispositif :
- d'une part en se plaçant en un repère fixe (repère Eulérien) au niveau du sol, où l'on voit passer la roue en un point donné, laquelle applique un effort dynamique, fonction de sa vitesse, présentée sur le graphique 4a ;
- et d'autre part en se plaçant dans un repère mobile (repère Lagrangien) lié au centre de la roue, l'historique des efforts dynamiques appliqués par la roue au sol est présenté sur le graphique 4b.

D'une manière générale, l'utilisation de ce nouveau concept conduit à des performances variables, fonctions principalement de la taille et des masses de la roue et de son lest, ainsi que des caractéristiques des ressorts et enfin de leur nombre. La finesse des pics d'effort montre l'importance d'augmenter le nombre d'ensembles mobiles et explique que la configuration proposée plus haut comprend 32 ensembles, soit 3 fois plus environ que dans le test présenté.

Les efforts nécessaires pour emmagasiner l'énergie élastique avant les impacts sont la cause d'un surcroît de résistance à l'avancement de la roue. L'invention transforme donc une poussée horizontale exercée par l'engin qui tracte ou pousse la roue en efforts dynamiques verticaux. Le fait que le galet roule sur la came en se déplaçant minimise les efforts de frottement et donc la poussée horizontale à exercer sur la roue.

Entre deux impacts successifs au sol, une zone du sol perçoit moins d'effort, comme le montre le graphique précédent. Afin de minimiser ce phénomène en augmentant la fréquence des impacts, une variante n°2 de l'invention consiste à doubler le nombre de masselottes en mettant côte à côte deux couronnes d'ensembles mobiles disposées en quinconce, c'est-à-dire décalées d'un angle égale à la moitié du secteur angulaire occupé par un ensemble masselotte- système élastique.

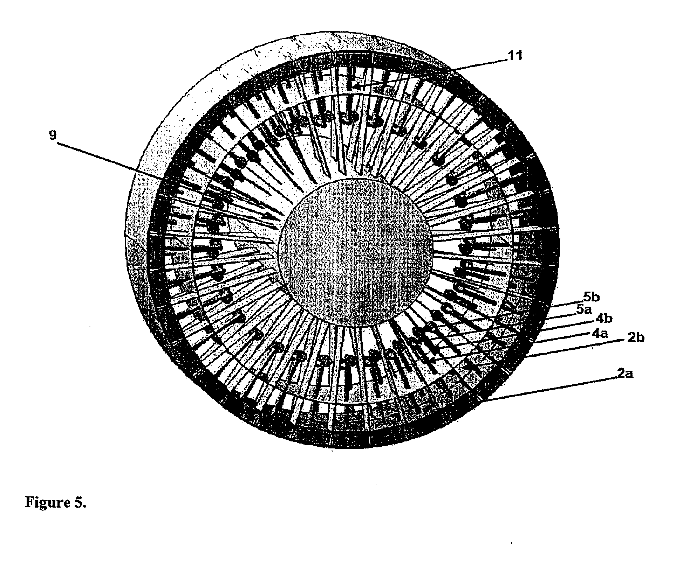

La figure 5 représente le schéma de principe de cette variante n°2 avec, par ensemble mobile, une tige et un galet qui peut être entraîné par une seule came centrale pour les deux couronnes. Sur la figure 5, deux couronnes d'ensembles mobiles, juxtaposées en quinconce sur la circonférence remplacent la couronne initiale. La masselotte 2b de la couronne en arrière plan est décalée d'une distance égale à la moitié de l'arc de cercle occupée par la masselotte 2a. Les ensembles tiges et galets (4a, 5a) et (4b, 5b) sont donc également décalés. La couronne 11 sur laquelle s'appuient les ressorts est représentée mais les ressorts 3 et la came centrale 6 qui viendrait se disposer entre les deux rangées de galets 5a et 5b comme dans la deuxième disposition décrite pour la variante à une seule couronne n'est pas représentée. Il n'y a donc pas lieu dans ce cas de modifier la glissière.

Les galets 5a et 5b arrivant de manière décalée au décrochage 7 de la glissière, la fréquence des impacts est doublée.

Cette variante n°2 avec deux couronnes peut aussi, bien que ce ne soit pas représenté, être adaptée au cas où deux cames d'entraînement identiques sont disposées de chaque côté de la roue, comme pour le cas avec une seule couronne. Il est bien sûr possible d'envisager d'augmenter encore le nombre de couronnes en les décalant successivement d'une fraction correspondante de l'angle occupé par un ensemble mobile mais cela nécessitera de modifier la disposition des glissières.

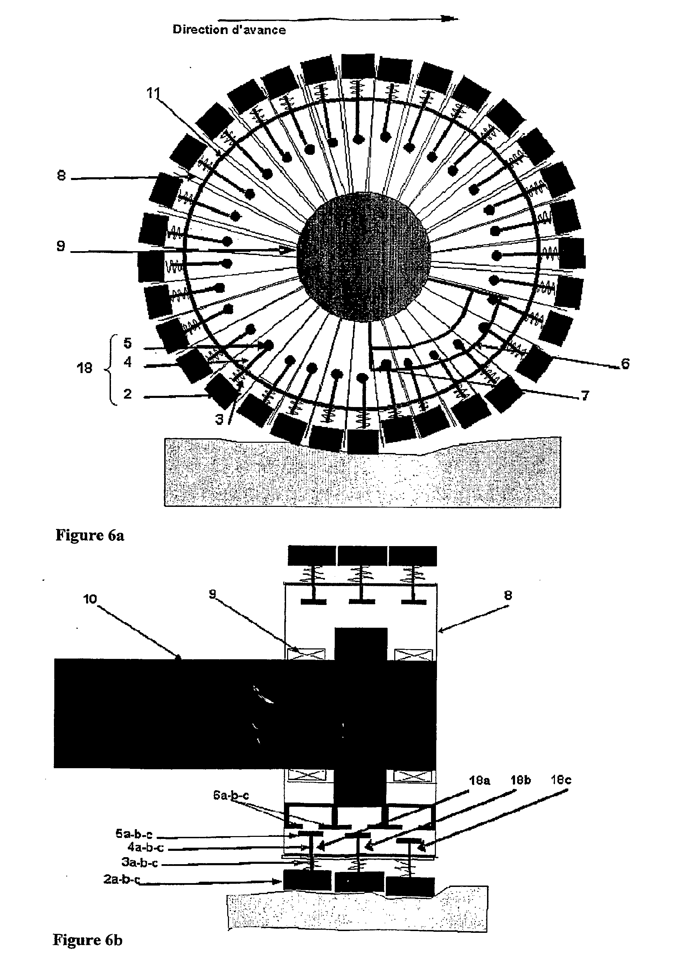

Une variante n°3, illustrée sur les figure 6a et 6b consiste à réutiliser le même principe de base, mais cette fois en créant l'impact directement au sol au niveau de chaque masselotte 2. La roue ne comporte plus de couronne extérieure pleine formant bande de roulement mais trois couronnes identiques d'ensembles mobiles 18a-b-c avec leurs systèmes élastiques 3a-b-c juxtaposés selon l'axe de l'essieu, sans décalage angulaire. Ce sont les faces périphériques des masselottes 2a-b-c qui forment une bande de roulement circulaire lorsque les ensembles mobiles sont en bout de course vers l'extérieur.

Si le sol est irrégulier, le fait que la course des ensembles mobiles 18a-b-c ne soit pas bloquée par une bande de roulement permet aux trois masselottes 2a-b-c des ensembles mobiles passant à la verticale sous l'axe de l'essieu d'être simultanément en contact avec le sol. Cette disposition, à trois masselottes successivement au contact avec le sol, présente l'avantage de mieux épouser le profil transversal du sol, dès lors qu'il s'agit de déminer des surfaces avec ornières ou ravinées, les autres variantes et les roues et galets classiques étant limités sur des sols à relief chahuté.

Dans cette variante n°3, la disposition des glissières 6a-b-c et galets 5a-b-c est définie comme suit (figure 6 b). Chaque ensemble mobile 18a-b-c comporte une seule tige 4a-b-c au centre avec un galet 5a-b-c de chaque côté radialement. L'essieu 10 comporte un disque central entouré par le moyeu 9 de la roue. A l'extrémité de ce disque, trois glissières 6a-b-c identiques ayant deux lames qui enserrent les galets 5a-b-c de chaque ensemble mobile sont fixées radialement côte à côte.

Un deuxième mode de réalisation, minimisant le nombre de systèmes mobiles, consiste à ce que ces ensembles mobiles restent situés dans le plan vertical passant sous l'axe de l'essieu, indépendamment du mouvement de la roue. Dans ce cas le moyen apte à entraîner l'ensemble mobile 181, solidaire de l'essieu 10, est une came 61 qui tourne avec la roue.

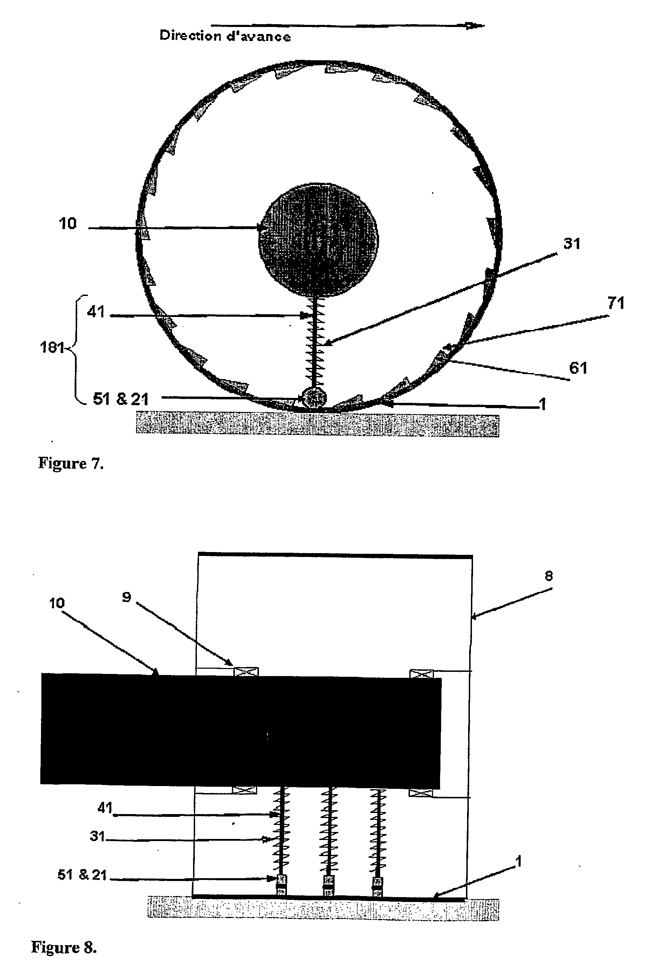

La figure n°7 montre une vue suivant l'axe de l'essieu de ce deuxième mode de réalisation. L'ensemble mobile est constitué d'une masselotte 21 fixée à au moins une tige 41 allant jusqu'à l'essieu 10. Soit la tige est libre en translation et coulisse par rapport à l'essieu avec la masselotte 21 fixée à son extrémité, soit la tige 41 est fixe par rapport à l'essieu 10 et la masselotte 21 peut coulisser le long de la tige 41. Dans les deux cas l'ensemble mobile aura une course verticale permettant de rapprocher la masselotte 21 avec une butée extérieure correspondant à la masselotte 21 appuyée contre la bande de roulement. D'une manière générale, l'ensemble mobile doit être fixé verticalement lorsque le dispositif avance et que la roue tourne en étant solidaire d'une structure fixe dans le repère de translation du dispositif, liée à l'essieu s'il ne tourne pas ou au chariot qu'il supporte.

Le système élastique est constitué d'un ressort appuyé entre la masselotte 21 et l'essieu 10 ou la structure fixe supportant l'ensemble mobile 181.

De manière préférentielle, le galet 51 servant à manoeuvrer l'ensemble mobile 181 fera aussi office de masselotte.

La géométrie de la came 61 fixée sur la circonférence intérieure de la bande de roulement est périodique, en dent de scie, et reproduit un motif de base en forme de coin dont la pointe est orientée vers le sens de rotation de la roue, avec un décrochement 71 suivi d'une portion de circonférence intérieure de la bande de roulement. Le secteur angulaire du motif de base est de taille supérieure à celui occupé par le galet 51 pour permettre à la masselotte 21 de revenir toucher la bande de roulement mais lui reste comparable en taille par rapport à la circonférence, en vue d'optimiser le nombre d'efforts dynamiques au sol. L'épaisseur maximum de la came 61 à l'endroit du décrochement 71 correspond à la course autorisée à l'ensemble mobile 181.

Comme dans le premier mode de réalisation, le nombre de profils de base de la came peut être modifié en fonction des dimensions de la roue et des réglages entre le poids de la masselotte 21 et la course de l'ensemble mobile.

Le glissement de l'extrémité basse de l'ensemble mobile sur les profils de la came 61 lors de la rotation de la roue permet de produire une succession d'impacts verticaux sur la bande de roulement 1 à l'endroit où elle est en contact avec le sol, produisant ainsi le même effet que dans le premier mode de réalisation. L'effort de frottement tangentiel de l'ensemble mobile sur la came sera avantageusement minimisé par le roulement du galet/masselotte 51&21.

La figure 8 montre une coupe axiale verticale d'une variante n°2 de second mode de réalisation comprenant plusieurs ensembles mobiles mis en parallèle dans le plan vertical afin d'augmenter le nombre d'impacts au sol. Les ensembles mobiles 181 avec leurs systèmes élastiques 31, répartis sur l'épaisseur de la roue sont identiques. Par contre, un profil de came 61 est spécifiquement adapté sur la circonférence interne de la bande de roulement parcourue par chaque ensemble mobile. Sur chaque circonférence on retrouve un profil de came géométriquement identique à celui qui serait utilisé pour le cas avec un seul ensemble mobile, décrit plus haut. Par contre, d'une circonférence à l'autre, chaque came est décalée par rapport à la précédente d'une fraction du secteur angulaire de base inverse au nombre d'ensembles mobiles. De cette façon, les impacts des masselottes sont décalés dans le temps à l'intérieur de la période de passage d'un motif de base de la came.

Ces différents types de roue pourront avantageusement être intégrés à une remorque dont la fonction sera le déminage par leurrage des mines à pression.

## Revendications

1. Dispositif de déclenchement de mine par pression comportant un châssis et au moins une roue avec un moyeu central (9) et comportant :
- au moins un ensemble (18) mobile en translation selon un rayon de la roue et comportant une masselotte (2) à son extrémité radiale périphérique,
- des moyens aptes à entraîner, lorsque la roue tourne dans une direction déterminée par rapport au châssis, ledit au moins ensemble mobile (18) en direction du moyeu (9) sur un secteur limité de la roue inférieur à 2π radians,
lesdits moyens aptes à entraîner ledit au moins ensemble mobile (18) en direction du moyeu (9) étant fixes par rapport au châssis.

2. Dispositif de déclenchement de mine par pression comportant un châssis et au moins une roue et un essieu (10) et comportant :
- au moins un ensemble (181) mobile en translation selon un rayon de la roue et comportant une masselotte (21) à son extrémité radiale périphérique,
- des moyens aptes à entraîner, lorsque la roue tourne dans une direction déterminée par rapport au châssis, ledit au moins ensemble mobile (181) en direction de l'essieu (10) sur un secteur limité de la roue inférieur à 2π radians,
l'ensemble mobile (181) étant fixé verticalement lorsque le dispositif avance et que la roue tourne et étant solidaire d'une structure fixe dans le repère de translation du dispositif, liée à l'essieu (10) s'il ne tourne pas ou au chariot qu'il supporte.

3. Dispositif de déclenchement de mine par pression selon la revendication 2, **caractérisé en ce que** ledit au moins un ensemble (181) mobile en translation comporte une tige (41) allant jusqu'à l'essieu, et **en ce que** la tige (41) est soit libre en translation et coulisse par rapport à l'essieu (10) avec la masselotte (21) fixée à son extrémité, soit fixe par rapport à l'essieu (10), la masselotte (21) pouvant coulisser le long de la tige (41).

4. Dispositif selon les revendications 1 à 3, **caractérisé en ce qu'**il comporte des moyens de stockage d'énergie aptes à emmagasiner de l'énergie lorsque ledit au moins ensemble mobile est entraîné en direction du moyeu et à restituer cette énergie lorsqu'il ne l'est plus.

5. Dispositif selon la revendication 4, **caractérisé en ce que** les moyens de stockage d'énergie comportent au moins un ressort.

6. Dispositif selon l'une quelconque des revendications 1 à 5, **caractérisé en ce que** lesdits moyens aptes à entraîner ledit au moins ensemble mobile en direction du moyeu (9) ou de l'essieu (10) comportent au moins une surface (6 ;61) apte à entrer en contact avec un élément de contact dudit au moins ensemble mobile sur ledit secteur limité entre une première extrémité et une seconde extrémité (7), cette dernière extrémité étant plus proche du moyeu que la première.

7. Dispositif selon la revendication 6 **caractérisé en ce que** ledit élément de contact est un galet.

8. Dispositif selon l'une quelconque des revendications 6 ou 7, **caractérisé en ce qu'**il comporte au moins une série d'ensembles mobiles (18) identiques formant une couronne complète, tournant avec la roue, et que le moyen d'entraînement commun pour chaque ensemble mobile de la couronne est formé d'une came (6) fixe par rapport au châssis occupant un secteur angulaire limité, dont la seconde extrémité (7) se trouve au niveau du demi plan vertical passant sous l'axe de la roue.

9. Dispositif selon la revendication 8 **caractérisé en ce que** la course des ensembles mobiles vers la périphérie de la roue est limitée par une bande de roulement (1) qui transmet les efforts au sol.

10. Dispositif selon la revendication 8 **caractérisé en ce que** les ensembles mobiles assurent le contact du dispositif avec le sol.

11. Dispositif selon l'une quelconque des revendications 8, 9 ou 10 **caractérisé en ce qu'**il comporte plusieurs couronnes identiques de même nombre d'éléments mobiles (18), juxtaposées dans l'axe de la roue avec un décalage angulaire des rayons entre les couronnes égal à l'angle du secteur angulaire occupé par un ensemble mobile divisé par le nombre de couronnes.

12. Dispositif selon l'une quelconque des revendications 6 ou 7, **caractérisé en ce qu'**il comporte au moins un ensemble mobile (181) fixé au châssis verticalement sous l'axe de la roue et que le moyen d'entraînement (61) dudit ensemble mobile tourne avec la roue.

13. Dispositif selon la revendication 12 **caractérisé en ce que** le moyen d'entraînement est une came (61) fixée sur la circonférence intérieure de la bande de roulement (1) qui reproduit un motif de base en forme de coin dont la pointe est orientée vers le sens de rotation de la roue avec un décrochement (71) suivi d'une portion de circonférence intérieure de la bande de roulement.

14. Dispositif selon la revendication 13 **caractérisé en ce que** plusieurs ensembles mobiles identiques (181) et leurs systèmes élastiques (31) sont juxtaposés dans le plan vertical sous l'axe de la roue, ces ensembles étant manoeuvrés par des cames (61) fixées à la roue de profils périodiques identiques mais décalées d'un angle égal à celui du secteur occupé par le motif de base divisé par le nombre d'ensembles mobiles.

## Claims

1. A device for triggering mines by pressure comprising a chassis and at least one wheel having a central hub (9) and comprising:
- at least one assembly (18) movable in translation along a radius of the wheel and comprising a weight block (2) at its peripheral radial end,
- means suitable for driving, as the wheel rotates in a determined direction with respect to the chassis, said at least one movable assembly (18) toward the hub (9) on a limited sector of the wheel that is less than 2π radians,
wherein said means suitable for driving said at least one movable assembly (18) toward the hub (9) are fixed with respect to the chassis.

2. A device for triggering mines by pressure comprising a chassis and at least one wheel and one axle (10) and comprising:
- at least one assembly (181) movable in translation along a radius of the wheel and comprising a weight block (21) at its peripheral radial end,
- means suitable for driving, as the wheel rotates in a determined direction with respect to the chassis, said at least one movable assembly (181) toward the axle (10) on a limited sector of the wheel that is less than 2π radians,
wherein the movable assembly (181) is vertically fixed as the device advances and the wheel rotates, and is integral with a structure that is fixed in the translation frame of reference of the device, connected to the axle (10) if it does not rotate or to the carriage that it supports.

3. Device for triggering mines by pressure according to claim 2, **characterized in that** said at least one assembly (181) movable in translation comprises a rod (41) extending to the axle, and **in that** the rod (41) is either free to translate and slides with respect to the axle (10) having the weight block (21) fastened to its end, or fixed with respect to the axle (10) and the weight block (21) can slide along the rod (41).

4. Device according to claims 1 to 3, **characterized in that** it comprises energy storage means suitable for storing energy when said at least one movable assembly is driven toward the hub and returning said energy when it is no longer being driven.

5. Device according to claim 4, **characterized in that** the energy storage means comprise at least one spring.

6. Device according to any one of claims 1 to 5, **characterized in that** said means suitable for driving said at least one movable assembly toward the hub (9) or the axle (10) comprise at least one surface (6;61) suitable for coming into contact with a contact element of said at least one movable assembly over said limited sector between a first end and a second end (7), said latter end being closer to the hub than the first.

7. Device according to claim 6, **characterized in that** said contact element is a roller.

8. Device according to any one of claims 6 or 7, **characterized in that** it comprises at least one series of identical movable assemblies (18) forming a complete ring that rotates with the wheel, and **in that** the common drive means for each movable assembly of the ring is constituted by a cam (6) fixed with respect to the chassis occupying a limited angular sector, the second end (7) of which is located at the vertical semi-plane passing below the axis of the wheel.

9. Device according to claim 8, **characterized in that** the travel of the movable assemblies toward the periphery of the wheel is limited by a running tread (1) that transmits the loads to the ground.

10. Device according to claim 8, **characterized in that** the movable assemblies ensure contact between the device and the ground.

11. Device according to any one of claims 8, 9 or 10, **characterized in that** it comprises several identical rings having the same number of movable elements (18), juxtaposed in the axis of the wheel and with an angular offset of the radii between the rings equal to the angle of the angular sector occupied by a movable assembly divided by the number of rings.

12. Device according to any one of claims 6 or 7, **characterized in that** it comprises at least one movable assembly (181) vertically fixed to the chassis below the axis of the wheel and **in that** the drive means (61) of said movable assembly rotates with the wheel.

13. Device according to claim 12, **characterized in that** the drive means is a cam (61) fastened on the inner circumference of the running tread (1), which reproduces a basic pattern in the form of a wedge the tip of which is oriented toward the wheel rotation direction with a step (71) followed by a portion of the inner circumference of the running tread.

14. Device according to claim 13, **characterized in that** several movable assemblies (181) and their elastic systems (31) are juxtaposed in the vertical plane below the axis of the wheel, wherein these assemblies are operated by cams (61) fastened to the wheel having periodic profiles that are identical but are offset by an angle equal to that of the sector occupied by the basic pattern divided by the number of movable assemblies.

## Patentansprüche

1. Vorrichtung zur Auslösung von Minen mittels Druck, die ein Fahrgestell und mindestens ein Rad mit einer mittigen Nabe (9) aufweist und Folgendes aufweist:
- mindestens eine Baugruppe (18), die entlang einer Speiche des Rads geradlinig beweglich ist und an ihrem peripheren radialen Ende ein Gewicht (2) umfasst,
- Mittel, die dafür geeignet sind, die mindestens eine bewegliche Baugruppe (18) in Richtung der Nabe (9) über einen begrenzten Ausschnitt des Rads von unter 2n Radiant mitzunehmen, wenn sich das Rad in eine festgelegte Richtung bezogen auf das Fahrgestell dreht,
wobei die Mittel, die dafür geeignet sind, die mindestens eine bewegliche Baugruppe (18) in Richtung der Nabe (9) mitzunehmen, bezogen auf das Fahrgestell feststehend sind.

2. Vorrichtung zur Auslösung von Minen mittels Druck, die ein Fahrgestell und mindestens ein Rad und eine Achse (10) aufweist und Folgendes aufweist:
- mindestens eine Baugruppe (181), die entlang einer Speiche des Rads geradlinig beweglich ist und an ihrem peripheren radialen Ende ein Gewicht (21) umfasst,
- Mittel, die dafür geeignet sind, die mindestens eine bewegliche Baugruppe (181) in Richtung der Achse (10) über einen begrenzten Ausschnitt des Rads von unter 2n Radiant mitzunehmen, wenn sich das Rad in einer festgelegten Richtung bezogen auf das Fahrgestell dreht,
wobei die bewegliche Baugruppe (181) senkrecht fixiert ist, wenn sich die Vorrichtung fortbewegt und wenn sich das Rad dreht und fest mit einer Struktur verbunden ist, die im Translationsbezugssystem der Vorrichtung feststeht und mit der Achse (10) verbunden ist, wenn sie sich nicht dreht, oder mit dem Fahrzeug, das sie trägt.

3. Vorrichtung zur Auslösung von Minen mittels Druck nach Anspruch 2, **dadurch gekennzeichnet, dass** die mindestens eine geradlinig bewegliche Baugruppe (181) einen Stab (41) aufweist, der bis zur Achse verläuft, und dass der Stab (41) entweder geradlinig frei beweglich ist und bezogen auf die Achse (10) gleitet, wobei das Gewicht (21) an seinem Ende befestigt ist, oder bezogen auf die Achse (10) feststeht, wobei das Gewicht (21) den Stab (41) entlang gleiten kann.

4. Vorrichtung nach Anspruch 1 bis 3, **dadurch gekennzeichnet, dass** sie Mittel zum Speichern von Energie aufweist, die dafür geeignet sind, Energie zu speichern, wenn die mindestens eine bewegliche Baugruppe in Richtung der Achse mitgenommen wird, und diese Energie wieder abzugeben, wenn sie es nicht mehr wird.

5. Vorrichtung nach Anspruch 4, **dadurch gekennzeichnet, dass** die Mittel zum Speichern von Energie mindestens eine Feder aufweisen.

6. Vorrichtung nach einem der Ansprüche 1 bis 5, **dadurch gekennzeichnet, dass** die Mittel, die dafür geeignet sind, die mindestens eine bewegliche Baugruppe in Richtung der Nabe (9) oder der Achse (10) mitzunehmen, mindestens eine Fläche (6; 61) aufweisen, die dafür geeignet ist, mit einem Kontaktelement der mindestens einen beweglichen Baugruppe über den begrenzten Ausschnitt zwischen einem ersten Ende und einem zweiten Ende (7) in Kontakt zu kommen, wobei dieses letzte Ende näher an der Nabe liegt als das erste.

7. Vorrichtung nach Anspruch 6, **dadurch gekennzeichnet, dass** das Kontaktelement eine Rolle ist.

8. Vorrichtung nach einem der Ansprüche 6 oder 7, **dadurch gekennzeichnet, dass** sie mindestens eine Reihe von identischen beweglichen Baugruppen (18) aufweist, die einen vollständigen Ring bilden, der sich mit dem Rad dreht, und dass das gemeinsame Mitnahmemittel für jede bewegliche Baugruppe des Rings von einer Kurve (6) gebildet ist, die bezogen auf das Fahrgestell feststeht und einen begrenzten Winkelausschnitt einnimmt, deren zweites Ende (7) sich im Bereich der senkrechten Halbebene befindet, die unter der Radachse verläuft.

9. Vorrichtung nach Anspruch 8, **dadurch gekennzeichnet, dass** der Weg der beweglichen Baugruppen zum Rand des Rads hin von einer Lauffläche (1) begrenzt ist, die die Kräfte auf den Boden überträgt.

10. Vorrichtung nach Anspruch 8, **dadurch gekennzeichnet, dass** die beweglichen Baugruppen den Kontakt der Vorrichtung mit dem Boden gewährleisten.

11. Vorrichtung nach einem der Ansprüche 8, 9 oder 10, **dadurch gekennzeichnet, dass** sie mehrere identische Ringe mit derselben Anzahl beweglicher Elemente (18) aufweist, die in der Radachse nebeneinander liegen, mit einem Winkelversatz der Speichen zwischen den Ringen, der dem Winkel des Winkelausschnitts entspricht, der von einer beweglichen Baugruppe eingenommen wird, geteilt durch die Anzahl der Ringe.

12. Vorrichtung nach einem der Ansprüche 6 oder 7, **dadurch gekennzeichnet, dass** sie mindestens eine bewegliche Baugruppe (181) aufweist, die senkrecht am Fahrgestell unter der Radachse befestigt ist und dass sich das Mitnahmemittel (61) der beweglichen Baugruppe mit dem Rad dreht.

13. Vorrichtung nach Anspruch 12, **dadurch gekennzeichnet, dass** das Mitnahmemittel eine Kurve (61) ist, die am Innenumfang der Lauffläche (1) befestigt ist und ein Grundmotiv in Form eines Keils wiederholt, dessen Spitze zur Drehrichtung des Rads ausgerichtet ist, mit einem Absatz (71), gefolgt von einem Abschnitt des Innenumfangs der Lauffläche.

14. Vorrichtung nach Anspruch 13, **dadurch gekennzeichnet, dass** mehrere identische bewegliche Baugruppen (181) und ihre elastischen Systeme (31) in der senkrechten Ebene unter der Radachse nebeneinanderliegen, wobei diese Baugruppen mit Kurven (61) betätigt werden, die am Rad befestigt sind und ein identisches regelmäßiges Profil aufweisen, das jedoch um einen Winkel versetzt ist, der dem des Ausschnitts entspricht, der von dem Grundmotiv eingenommen wird, geteilt durch die Anzahl von beweglichen Baugruppen.
